**Europäisches Patentamt**

**European Patent Office**

**Office européen des brevets**

(11) Veröffentlichungsnummer: **0 115 602**
**A1**

# (12) EUROPÄISCHE PATENTANMELDUNG

(21) Anmeldenummer: **83112473.0**

(22) Anmeldetag: **12.12.83**

(51) Int. Cl.³: **B 21 D 5/02**, B 21 D 43/10, B 25 J 11/00, B 25 J 15/02

(30) Priorität: **06.01.83 CH 63/83**

(43) Veröffentlichungstag der Anmeldung: **15.08.84**
**Patentblatt 84/33**

(84) Benannte Vertragsstaaten: **AT DE FR GB IT**

(71) Anmelder: **INVENTIO AG, Seestrasse 55, CH-6052 Hergiswil NW (CH)**

(72) Erfinder: **Ragettli, Christian, Im Langstuck 20, CH-8044 Gockenhausen (CH)**
Erfinder: **Frei, Theo, Ackerstrasse 7, CH-4800 Zofingen (CH)**

(54) **Vorrichtung zum Manipulieren von Werkstücken.**

(57) Mit dieser Vorrichtung können vor allem schwere und unhandliche Blechtafeln (28) ohne menschliche Kraft von einer Stapeleinrichtung übernommen und einer Abkantpresse (1) für die Bearbeitung zugeführt werden. Mittels drehbarer, an einem auf und ab bewegbaren Zangenschlitten (20) angeordneter Zangen (24), hin und her bewegbarer erster Horizontalschlitten (9), vor- und rückbewegbarer zweiter Horizontalschlitten (16) und einer Drehvorrichtung (39) läßt sich jede Blechtafel (28) um eine horizontale Zangenachse (25) direkt wenden und/oder in der Ebene der Blechtafel (28) mit einem neuen Fassen indirekt drehen. Die normalerweise mittels zwei Zangen (24) gehaltene Blechtafel (28) wird unter der Zangenachse (25) durch eine mehrteilige, von zwei unabhängig bewegbaren Blechstützenschlitten (21) getragene Blechstütze (29, 30) unterstützt. Damit ist es möglich, jede Kante der Blechtafel (28) für Aufwärts- und/oder Abwärtsbüge in den Arbeitsbereich des Werkzeugstempels (3) zu führen und die Blechtafel (28) auch während des Arbeitsganges zu halten.

ACTORUM AG

0115602

- 1 -

Vorrichtung zum Manipulieren von Werkstücken

Die Erfindung bezieht sich auf eine Vorrichtung zum Manipulieren von Werkstücken, insbesondere Blechtafeln, vor, in und hinter der Bewegungsebene eines Werkzeuges einer Presse, insbesondere einer Abkantpresse mit mindestens einem Transportschlitten und mindestens einer Zange.

Mit der DE-AS 28 06 987 ist eine Vorrichtung zum Manipulieren von Werkstücken in einem Pressenraum einer Schmiedepresse bekanntgeworden. Der obere von zwei übereinander angeordneten Transportschlitten für eine Vorwärts- und Rückwärtsbewegung bzw. für eine Hin- und Herbewegung trägt, verbunden mit einer Vertikalspindel, einen Abhebeschlitten. Der Abhebeschlitten weist einen Zangenschlitten mit mindestens einer Manipulierzange und mindestens einer Verstellzahnstange auf, welche von einem auf der Vertikalspindel angeordneten Ritzel angetrieben wird, während die Manipulierzange durch eine Stellzylinderkolbenanordnung betätigt wird. Diese Vorrichtung ist geeignet für eine spezielle Bearbeitung von Werkstücken, wie Schmieden, Gesenkschmieden oder Stanzen. Der Nachteil dieser Vorrichtung liegt darin, dass die Manipulierzange das Werkstück für die Bearbeitung im Pressenraum absetzt und sich während des Arbeitshubes ausserhalb des Pressenraumes befindet und das Werkstück für jede nachfolgende Manipulation für eine weitere Bearbeitung neu fassen muss.

Eine weitere DE-AS 28 47 543 offenbart eine Be- und Entladevorrichtung für Pressen oder ähnliche Werkzeugmaschinen, welche die Aufgabe hat, ein Werkstück von einem Stapelplatz abzuheben, im Pressenraum einer Presse oder einer Stanze abzusetzen, um es nach erfolgter Bearbeitung von der Matrize wieder aufzunehmen und auf einem Stapelplatz abzusetzen. Zur Erzielung eines bestimmten Bewegungsablaufes, mit im wesentlichen geradlinigen horizontalen hin- und hergehenden Bewegungen, mit senkrechten Bewegungen in den beiden Endphasen, dient als Transportarm ein Teil eines Parallelogrammgestänges, das über eine Kurbelschwinge und eine entsprechende Kurvenscheibe gesteuert wird. Die Vorrichtung eignet sich ebenfalls für die Beschickung von Pressen oder Stanzen, bei denen das Werkstück bearbeitet wird, während sich die Beladevorrichtung ausserhalb des Pressenraumes befindet. Der Nachteil der bekannten Vorrichtung liegt ebenfalls darin, dass für jede Umstellung oder die Entladung das Werkstück neu gefasst werden muss.

0115602

Der Erfindung liegt die Aufgabe zugrunde, eine Manipuliervorrichtung für Pressen, insbesondere Abkantpressen, vorzuschlagen, die es ermöglicht, vor allem schwere und unhandliche Werkstücke, beispielsweise schwere und grosse Blechtafeln, die von einem einzelnen Arbeiter ohne Hilfsmittel nicht mehr, oder nur sehr schwer, bewegt werden können, automatisch und zeitsparend in alle nötigen Positionen zu bringen, die beispielsweise für eine verschiedenartige Abkantung erforderlich sind, wobei gleichgerichtete Kantungen auf der gleichen Blechseite, oder gegengerichtete Kantungen auf der gegenüberliegenden Blechseite, ausgeführt werden können, ohne dass die Zangen die Blechtafeln zwischen den einzelnen Bearbeitungsfolgen verlassen müssen.

Diese Aufgabe wird durch die in den Ansprüchen gekennzeichnete Erfindung gelöst.

Die durch die Erfindung erreichten Vorteile sind im wesentlichen darin zu sehen, dass beispielsweise schwere und unhandliche Blechtafeln für die Beschickung einer Abkantpresse, für die Manipulationen und Umstellungen für das Kanten und eventuell zum Wegführen der bearbeiteten Werkstücke ohne menschliche Kraft, genau wiederholbar, ohne unnötige Verlustzeiten automatisch verschoben werden können, und dass Einzelelemente im Baukastenprinzip der Grundausführung der Vorrichtung, sowohl auf der Zubringer- wie

- 4 -

C115602

auf der Abzugseite, zugeordnet werden könnnen.

Auf beiliegenden Zeichnungen ist ein Ausführungsbeispiel der Erfindung dargestellt, das im folgenden näher erläutert wird. Es zeigen:

Fig. 1    eine Seitenansicht einer Manipuliervorrichtung vor einer Abkantpresse aufgestellt;

Fig. 2    einen Grundriss der Manipuliervorrichtung gemäss Fig. 1;

Fig. 3    eine Einzelheit gemäss Schnitt A-A aus Fig. 1;

Fig. 4    eine Einzelheit eines Zangenschlittens gemäss dem Grundriss Fig. 2

Fig. 5    einen Aufriss einer Ausführungsvariante einer Zange und

Fig. 6    einen Grundriss der Zange gemäss Fig. 5.

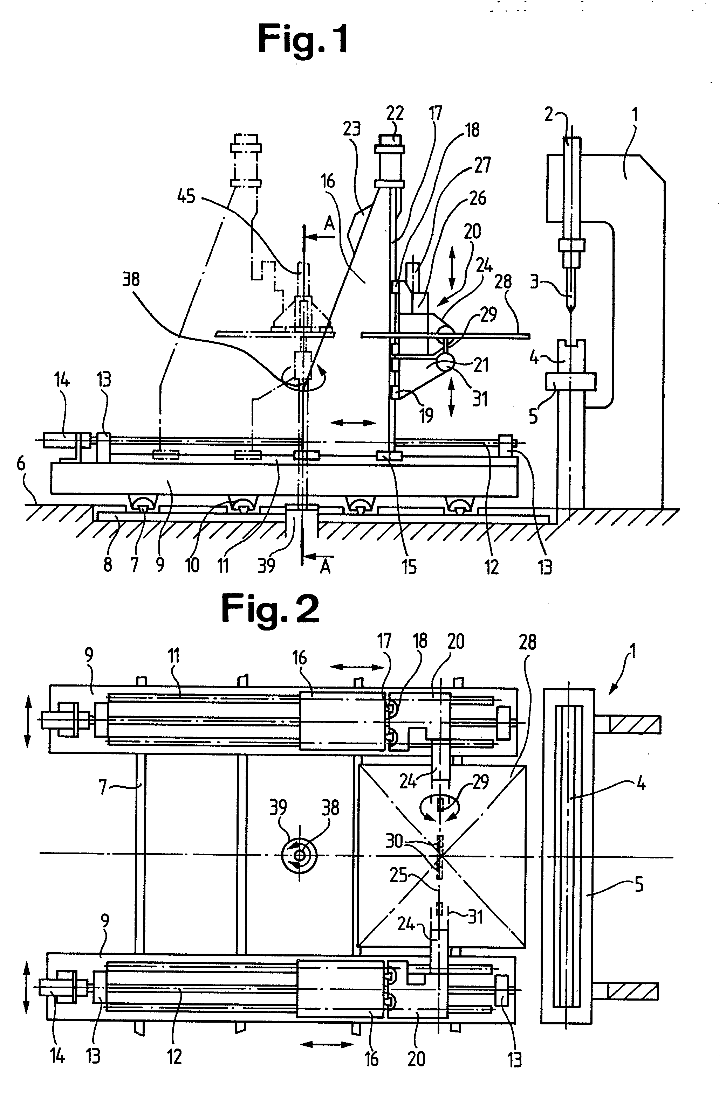

In den Figuren 1 und 2 ist mit 1 eine Abkantpresse mit einem Stössel 2, einem Werkzeugstempel 3, einer Matrize 4 und einem Arbeitstisch 5 bezeichnet. Vor der Abkantpresse 1 sind parallel zum Werkzeugstempel im Fussboden 6 Führungsschienen 7 eingelassen, welche zwei senkrecht zum Werkzeugstempel 3 angeordnete und parallel zum Werkzeugstempel verschiebbare erste Horizontalschlitten 9 tragen. Die Führungsschienen 7 besitzen einen trapezförmigen Querschnitt und liegen auf einer Unterlage 8 auf. Gleitbare Linearkugelführungselemente 10 umgreifen die Führungsschienen 7 und bilden das Bindeglied zwischen den Führungsschienen 7 und dem ersten Horizontalschlitten 9. Die Führungsschienen 7 sind so im Fussboden 6 eingelassen, dass der Platz vor der Abkantpresse 1 zwischen den ersten Horizontalschlitten 9 ohne Schwierigkeiten begangen oder befahren werden kann. Auf jedem ersten Horizontalschlitten 9 sind zwei in Längsrichtung angeordnete, ebenfalls einen trapezförmigen Querschnitt aufweisende Führungsschienen 11 und ein Kugelspindelantrieb vorgesehen. Die Antriebsspindel 12 wird an beiden Enden durch ein Lager 13 abgestützt und durch einen Getriebemotor 14 angetrieben. Die Führungsschienen 11 tragen über Linearkugelführungselemente 15 einen senkrecht zum Werkzeugstempel vor- und rückbewegbaren zweiten Horizontalschlitten 16. Am zweiten Horizontalschlitten 16 sind auf der gegen den Werkzeugstempel 3 gerichteten Seite zwei vertikal angeordnete Führungsschienen 17 mit trapezförmigem Querschnitt vorgesehen. Die Führungsschienen 17 tragen über Linearkugelführungselemente 18, 19 einen vertikal verschiebbaren Zangenschlitten 20 und einen ebenfalls vertikal verschiebbaren Blechstützenschlitten 21. Der Zangenschlitten 20 und der Blechstützenschlitten 21 können unabhängig voneinander durch je einen nicht dargestellten Kettentrieb auf-und abbewegt werden. Ein zugehöriger Getriebemotor 22 für den Antrieb des Zangenschlittens 20 und ein Oelmotor 23 für den Blechstützenschlitten 21 sind am oberen Ende des zweiten Horizontalschlittens 16 angeordnet. Der Zangenschlitten 20 besitzt eine hydraulisch schliessbare und nach der Dicke der zu fassenden Blechtafel 28 selbstregulierende, aus zwei Greifbacken bestehende Zange 24. Die Zange 24 ist in ihrer Zangenachse 25 horizontal drehbar. Ein zugehöriges Drehgetriebe 26 wird durch einen vertikal angeordneten Motor 27 angetrieben. Die zu bearbeitende Blechtafel 28 wird im Normalfalle durch die zwei gegenüberliegenden Zangen 24 getragen. Zwischen diesen beiden Zangen 24 sind unmittelbar neben jeder Zange 24 und in der Mitte zwischen den Zangen 24 je eine Blechstütze 29, 30 angeordnet. Die Blechstützen 29, 30 werden durch zwei von zwei Blechstützenschlitten 21 geführte und durch Abspannungen 32 verstärkte Hohlachsen 31 getragen. Die mittlere Blechstütze 30 besteht aus einem Hohlkörper 33, welcher die beiden Hohlachsen 31 verbindet und an welchem die Abspannungen 32 verankert sind. Im Hohlkörper 33 ruht drehbar gelagert ein Kupplungsstück 34, welches mit einem auf einer Arretierung 47 des Hohlkörper 33 abgestützten Schwert 35 mit zwei Stützflächen 36 durch einen Drehzapfen 37 verbunden ist. In das Kuppplungsstück 34 passt ein höhenverstellbarer Stempel 38 einer Drehvorrichtung 39. Die Drehvorrichtung 39 ist im Zentrum der Manipuliervorrichtung im Fussboden 6 versenkt angeordnet.

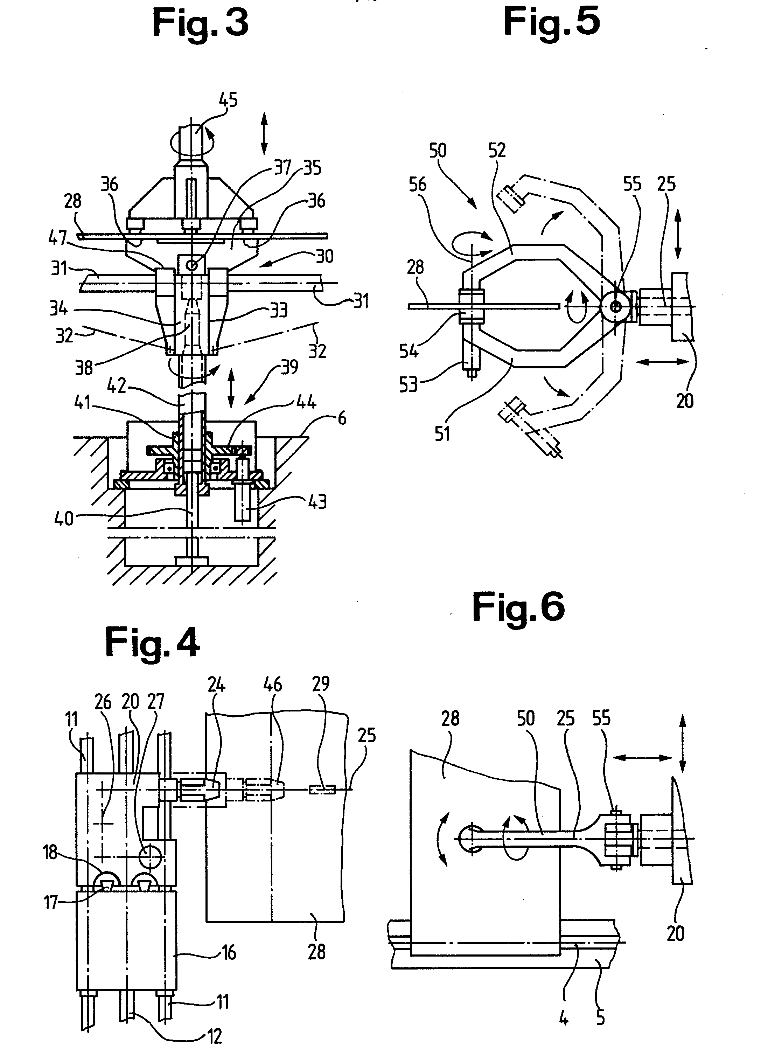

In der Fig. 3 ist die Einrichtung zum Drehen der Blechtafel in ihrer Ebene als Einzelheit dargestellt. Ein am Grund der Drehvorrichtung 39 vertikal aufgestellter Kolben 40 wird durch einen in einem drehbar gelagerten Führungsstück 41 verdrehsicher aber vertikal verschiebbar gelagerten Zylinder 42 zentriert. Ein Getriebemotor 43 und ein Untersetzungsgetriebe 44 dienen dazu, den Zylinder 42 über das drehbar gelagerte Führungsstück 41 in der vertikalen Achse zu drehen. Die vertikale Bewegung des Zylinders 42 mit dem Stempel 38 wird durch ein nicht dargestelltes Hydrauliksystem bewerkstelligt. Ein drehbarer und ebenfalls vertikal bewegbarer Gegenhalter 45 beispielsweise mit Saugnäpfen als Halteelemente ausgerüstet dient als Halterung der Blechtafel 28 und als Gegendruckelement für die Einrichtung zum Drehen der Blechtafel in ihrer Ebene. Der Gegenhalter 45 ist an einem nicht dargestellten, über die Manipuliervorrichtung sich erstreckendes Joch verschiebbar angeordnet und kann gleichzeitig auch als Zubringer für die zu bearbeitende Blechtafel 28 dienen.

In der Fig. 4 ist der Zangenschlitten 20 in vergrösserter Darstellung gezeichnet. Am zweiten Horizontalschlitten 16 sind die vertikalen Führungsschienen 17 angeordnet. Der Zangenschlitten 20 wird von den Linearkugelführungselementen 18 vertikal verschiebbar mit den Führungsschienen 17 verbunden. Der Zangenschlitten 20 besteht aus dem vertikal angeordneten Motor 27, dem Drehgetriebe 26 und der Zange 24.

Eine weitere Ausführungsvariante mit einer verlängerten Zange 46 zum Greifen der Blechtafeln 28 auch hinter dem Werkzeugstempel 3 ist strichpunktiert angedeutet. Die Blechtafel 28 wird unter der Zangenachse 25 durch die Blechstützen 29 gestützt. Der zweite Horizontalschlitten 16 wird auf den senkrecht zum Werkzeugstempel 3 verlaufenden horizontalen Führungsschienen 11 gleitend geführt und durch die Kugelspindel 12 vor- und rückbewegt.

Die in den Fig. 5 und 6 vorgeschlagene Zange 50 weist einen unteren Greifer 51 und einen oberen Greifer 52 auf. Die beiden Greifer 51, 52 sind im Drehzapfen 55 schliessbar gelagert. Im unteren Greifer 51 ist eine Drehvorrichtung 54 mit einem Getriebemotor 53 angeordnet. Die Zange 50 ist im Zangenschlitten 20 um die horizontale Achse 25 drehbar gelagert. Die gefasste Blechtafel 28 kann mit der Drehvorrichtung um eine vertikale Achse 56 in ihrer Ebene gedreht werden. Der Arbeitstisch der Abkantpresse wird mit 5 und die zugehörige Matrize mit 4 bezeichnet.

Die vorstehend beschriebene Manipuliervorrichtung arbeitet wie folgt:
Durch eine nicht dargestellte Uebergabevorrichtung mit einer Greifereinrichtung wird die einzelne Blechtafel 28 durch den Gegenhalter 45 über ein Joch auf die in die Mitte der Manipuliervorrichtung verfahrene unter der Zangenachse liegende Blechstützen 29, 30 abgesetzt und in der horizontalen Lage gehalten. Die beiden Horizontalschlitten 9 bewegen sich gemeinsam gegeneinander, wobei die geöffneten Zangen 24 über die Seitenkanten der Blechtafel 28 greifen. Sie halten an sobald die Kante der Blechtafel am Grund des Zangenmauls ansteht. Ein hydraulisch betätigter Keil schliesst die Backen der Zange 24, 46, die sich entsprechend der Dicke der Blechtafel 28 selbsttätig parallel zur Blechoberfläche einstellen. Die durch die Blechstützen 29, 30 gestütze Blechtafel 28 wird nun durch die Verschiebung des zweiten Horizontalschlittens 16 gegen den Werkzeugstempel 3 bewegt, und zwar in einer Höhe die ein Aufliegen der Blechtafel auf dem Arbeitstisch 5 ermöglicht. Durch ein Anstossen der Blechtafel an der Matrize 4, bei gleichzeitig starkem Reduzieren der Schliesskraft der Zangen 24, 46, wird ein genaues Positionieren und eine Einstellung der Parallelität zwischen der Kante der Blechtafel und des Werkzeugstempels erreicht. Die Zangen schliessen sich wieder und die Blechtafel ist für die Bearbeitung bereit. Sie wird auf die Höhe der Matrize gehoben und um das für die vorgesehene Kantung vorbestimmte Mass unter den Werkzeugstempel geführt. Beim Kanten bewegen sich die beiden durch den Werkzeugstempel unterteilten Flächen der Blechtafel vor und hinter der Berührungslinie nach oben. Die mit der Blechtafel verbundenen, geschlossenen Zangen machen automatisch die entsprechende Bewegung mit, d.h. die zweiten Horizontalschlitten 16 und die Zangenschlitten 20 bewegen sich genau programmiert gleichzeitig nach rückwärts bzw. nach oben, während sich die Zangen 24, 46 entsprechend

0115602

der Blechstellung drehen. Ist auf der gleichen Seite eine weitere gleichsinnige Biegung erforderlich, wird die vor dem Werkzeugstempel liegende Fläche der Blechtafel, nachdem der Werkzeugstempel in seine Ausgangslage gefahren ist, in die horizontale Lage gebracht und erneut um das erforderliche Mass unter den Werkzeugstempel gefahren. Die zweite Kantung verläuft genau gleich wie die erste. Ist auf der Gegenseite eine gegensinnige Biegung erforderlich, wird die von den beiden Zangen gefasste Blechtafel um die Zangenachse 25 gedreht, wobei die zweiten Horizontalschlitten 16 sich so weit vom Werkzeugstempel entfernen, dass die Blechtafel ohne irgendwo anzustehen gedreht werden kann. Beim Drehen der Blechtafel um die Zangenachse bleiben die Blechstützen 29 in ihrer Lage bis die Blechtafel eine Neigung erreicht, die keine Unterstützung mehr erfordert. Die Blechstützen 29 sind so ausgebildet, dass sie bei dieser Drehung durch die von der Blechtafel ausgeübten Verdrängungskräfte seitlich ausweichen können, aber trotzdem die nötige Stützkraft noch aufbringen. Nachdem die Blechtafel eine ungefähre Neigung von $60^{\circ}$ zur Horizontalebene erreicht hat, bewegen sich die Blechstützenschlitten nach unten weg bis die Blechtafel gedreht werden kann. Genügt dieser Weg für die Drehung der Blechtafel noch nicht, müssen auch die Zangenschlitten 20 nach oben verschoben werden. Sobald die Blechtafel die Vertikalebene überschritten hat bewegen sich die Blechstützenschlitten 21 wieder nach oben um bei der entsprechenden Neigung wieder die ursprüngliche Stützlage einzunehmen. Die in die Horizontallage gebrachte Blechtafel wird hierauf mit der noch unbearbeiteten Kante um ein vorbestimmtes Mass über die Matrize geschoben und in der gleichen Art wie vorher beschrieben gekantet. Ist auf der ersten Bearbeitungsseite des Bleches eine gegensinnige Biegung oder auf der zweiten Bearbeitungsseite eine gleichsinnige Biegung erforderlich, muss die Blechtafel vor dieser Bearbeitung in ihrer Ebene gedreht werden. Zu diesem Zweck wird die Manipuliervorrichtung gemeinsam mit der gefassten Blechtafel derart verfahren, dass die mittlere Blechstütze 30 über den Stempel 38 der Drehvorrichtung 39 zu stehen kommt. Ist diese Stelle erreicht, hebt sich der Stempel 38 mit dem Zylinder 42, hydraulisch betätigt, und verbindet sich durch Nocken verdrehsicher mit dem Kupplungsstück 34 der Blechstütze 30. Gleichzeitig senkt sich der Gegenhalter 45 und legt sich von oben auf die Blechtafel. Sobald das Kuppeln abgeschlossen ist und der Gegenhalter 45 auf der Blechtafel aufliegt, werden die Zangen 24, 46 geöffnet und die beiden ersten Horizontalschlitten 9 von der Mitte so weit wegbewegt, dass die Distanz zwischen den beiden Zangen grösser ist als die Diagonale der Blechtafel. Die durch die Blechstütze 30 und den Gegenhalter 45 in einer Horizontalebene gehaltene Blechtafel wird nun gemeinsam mit den beiden Halteelementen leicht angehoben bis das Schwert 35 mindestens aus der Arretierung 47 des Hohlkörpers 33 geführt ist. Sind bereits irgendwelche störende Abkantungen vorhanden, muss die Vertikalbewegung entsprechend grösser ausgeführt werden. Der Getriebemotor 43 der Drehvorrichtung 39 dreht nun über das Untersetzungsgetriebe 44 den Zylinder 42 und damit die zwischen dem Schwert 35 und dem Gegenhalter 45 gefasste Blechtafel 28 in ihrer Ebene, beispielsweise um 180° oder um 90°. Nachdem das Schwert 35 wieder gemeinsam mit der Blechtafel in die Arretierung 47 des Hohlkörpers 33 zurückgeführt ist, bewegen sich die ersten Horizontalschlitten 9 mit offenen Zangen 24, 46 gegen die Blechtafel. Die Zangen fassen die Blechtafel sobald die Blechkanten am Grund des Zangenmauls anstehen. Die zweiten Horizontalschlitten 16 bewegen sich nun gemeinsam mit der gefassten Blechtafel wieder gegen den Werkzeugstempel sobald der sich absenkende Stempel 38 das Kupplungsstück 34 verlassen hat und der Gegenhalter 45 sich anhebt um nach einer bereits vorhin beschriebenen genauen Positionierung der Blechtafel mit den vorgesehenen Abkantungen weiterzufahren.

Um eine Blechtafel (28) für bestimmte Kantungen auch hinter dem Werkzeugstempel 3 fassen zu können wird die Manipuliervorrichtung mit den verlängerten Zangen 46 ausgerüstet. Die beiden ersten Horizontalschlitten 9 befinden sich je seitlich ausserhalb der Abkantpresse 1 während die Blechtafel 28 durch die verlängerten Zangen 46 gehalten und durch die Blechstützen 29, 30 gestützt werden. Damit die Blechtafel mit den Zangen 46 und den nötigen Blechstützen 29, 30 hinter den Werkzeugstempel 3 gefahren werden

C115602

kann ist eine genügende Distanz zwischen dem Werkzeugstempel und der Matrize in der Ruhelage und eine genügende Ausladung des Ständers der Abkantpresse 1 Voraussetzung. Beim Kanten bewegen sich die mit der Blechtafel verbundenen geschlossenen Zangen mit der hinter dem Werkzeugstempel aufgebogenen Blechtafel mit, wobei die drei Bewegungen, die Horizontalbewegung der zweiten Horizontalschlitten 16, die Vertikalbewegung der Zangenschlitten 20 und die Drehbewegung der Zangen 46 wieder genau auf die Bewegung der Blechtafel abgestimmt sind.

Der für die Bewegung des Blechstützenschlittens 21 und für das Aufbringen der Stützkraft vorgesehene Oelmotor 23 ist so ausgelegt, dass die Stützkraft der Blechstütze das Eigengewicht der Blechtafel und teilweise das Gewicht des Zangenschlittens ausbalanciert. Dadurch ergibt sich eine leichtere Steuerbarkeit der Zange und des Zangenschlittens, welche während des Kantvorganges der Bewegung der Blechtafel genau folgen müssen.

Mit der in den Fig. 5 und 6 gezeigten Zange 50 lassen sich kleinere Blechtafeln, mit nur einer Zange, allseitig abkanten, normalerweise ohne dass ein Nachfassen erforderlich ist. Jede Kante der Blechtafel 28 ist durch die im unteren Greifer 51 eingebaute Drehvorrichtung 54 der Abkantpresse 1 zudrehbar. Mit der Drehung der Zange 50 um die Achse 25 kann die Kantrichtung nach oben oder nach unten einge-

0115602

stellt werden. Durch die Bewegung des zweiten Horizontalschlittens 16 gegen den Werkzeugstempel 3 bzw. durch die Vertikalbewegung des Zangenschlittens 20 und des Blechstützenschlittens 21 wird die Blechtafel in richtiger Höhe der Abkantpresse zur Bearbeitung zugeführt. Die nötige Bewegung der Greifeinrichtung während des Kantens wird durch die programmierten Bewegungen, einerseits durch die Horizontalbewegung des zweiten Horizontalschlittens 16 bzw. die Vertikalbewegung des Zangenschlittens 20 und des Blechstützenschlittens 21und andererseits durch die Drehbewegung der Zange 50 um die horizontale Achse 25 erreicht.

Anstelle der vorstehend beschriebenen Manipuliervorrichtung mit zwei hin- und herbewegbaren ersten Horizontalschlitten und je einem auf diesen angeordneten und rechtwinklig zu diesen vor- und rückbewegbaren zweiten Horizontalschlitten, könnte auch eine solche mit einem vor- und rückbewegbaren zweiten Horizontalschlitten und zwei auf diesem angeordneten und rechtwinklig zu diesem hin- und herbewegbaren ersten Horizontalschlitten vorgesehen sein.

Es ist ohne weiteres möglich, kleinere Blechtafeln welche nur mit einer einzigen Zange gehalten sind zu bearbeiten, wobei eine die Blechtafel umgreifende und in der Tafelmitte von unten und von oben fassende Zange nötig wäre. Die einerseits in ihrer Achse drehbare Zange

0 15602

müsste andererseits eine in einem Greifer der Zange angeordnete die Blechtafel in ihrer Ebene drehende Drehvorrichtung aufweisen, damit alle möglichen Kantungen ohne ein Nachgreifen durchgeführt werden können.

Es ist auch denkbar mit den beschriebenen Manipuliervorrichtungen neben der automatischen Blechbearbeitung auch einen automatischen Werkzeug- und/oder Matrizenwechsel vorzunehmen, beispielsweise für die Ausführung von Prägepressungen in Verbindung mit Dreipunktbiegen. Zu diesem Zweck wäre ein neben der Abkantpresse stationierter Werkzeugkasten mit in Tragvorrichtungen genau positionierten Werkzeugstempeln oder Matrizen erforderlich. Beim Auswechseln würde die Zange der Manipuliervorrichtung vom Werkzeugkasten eine leere, zugehörige Tragvorrichtung ergreifen um damit das bisherige Werkzeug aufzunehmen und anschliessend im Werkzeugkasten unterzubringen. Ein neues Werkzeug würde durch die Zange gemeinsam mit der Tragvorrichtung gefasst, eingesetzt und die leere Tragvorrichtung im Werkzeugkasten wieder verstaut.

Mit der erfindungsgemässen Vorrichtung ist es ohne weiteres möglich, kombinierte Arbeiten aus mehreren Einzelteilen automatisch und programmgemäss auszuführen. Beispielsweise könnten ein Grundblech und ein Deckblech unabhängig voneinander einzeln abgekantet werden um nach dem Einlegen beispielsweise eines Isolationsmaterials

0115602

gemeinsam gekantet und geschlossen werden.

Anstelle einer Verlängerung der Zangen 46 zum Greifen der zu kantenden Blechtafel 28 von der Rückseite des Werkzeugstempels 3 her, könnte eine gleiche Manipuliervorrichtung hinter dem Werkzeugstempel wie vor dem Werkzeugstempel installiert werden.

0115602

Patentansprüche:

1. Vorrichtung zum Manipulieren von Werkstücken insbesondere Blechtafeln (28), vor, in und hinter der Bewegungsebene eines Werkzeugstempels (3) einer Presse, insbesondere einer Abkantpresse (1) mit mindestens einem Transportschlitten und mindestens einer Zange (24), d a d u r c h   g e k e n n z e i c h n e t, dass die Blechtafel (28) mindestens vor der Presse von mindestens einer an mindestens einem in einer parallel zur Bewegungsebene des Werkzeugstempels (3) aufgespannten Ebene auf- und abbewegbaren Zangenschlitten (20) vorgesehenen drehbaren Zange (24, 46, 50) getragen ist, wobei der Zangenschlitten an mindestens einem in einer senkrecht zur Bewegungsebene des Werkzeugstempels (3) aufgespannten Ebene hin- und herbewegbaren ersten (9) und an mindestens einem zu diesem rechtwinklig vor- und rückbewegbaren zweiten Horizontalschlitten (16) angeordnet ist, und dass eine die Blechtafel (28) in ihrer Ebene drehende Drehvorrichtung (39, 54) vorhanden ist.

2. Vorrichtung nach Anspruch 1, d a d u r c h   g e k e n n z e i c h n e t, dass die Blechtafel (28) von mindestens einer an mindestens einem der Bewegungsbahn des Zangenschlittens folgenden auf- und abbewegbaren Blechstützenschlitten (21) angeordneten Blechstütze (29, 30) gestützt ist.

3. Vorrichtung nach Anspruch 2,

   d a d u r c h   g e k e n n z e i c h n e t ,

   dass die Blechstütze (29, 30) auf die Blechtafel (28)
   durch einen den Blechstützenschlitten (21) bewegenden
   Oelmotor (23) eine das Gewicht der Blechtafel (28) und
   teilweise das Gewicht des Zangenschlittens (20) ausbalancierende Kraft ausübt.

4. Vorrichtung nach Anspruch 1,

   d a d u r c h   g e k e n n z e i c h n e t ,

   dass die Drehvorrichtung (39) im Fussboden (6) versenkbar angeordnet ist und mit der drehbar gelagerten
   durch eine Hohlachse (31) mit zwei Blechstützenschlitten (21) verbundenen, die Blechtafel (28) in der Mitte
   stützenden Blechstütze (30) und einem die Blechtafel
   (28) in einer horizontalen Ebene haltenden Stempel (45)
   einer Gegendruckeinrichtung zusammenarbeitet.

5. Vorrichtung nach Anspruch 1,

   d a d u r c h   g e k e n n z e i c h n e t ,

   dass die Drehvorrichtung (54) in einem Greifer (51)
   der die Blechtafel (28) umgreifenden und mittig fassenden Zange (50) angeordnet ist.

0115602

6. Vorrichtung nach Anspruch 1,

d a d u r c h   g e k e n n z e i c h n e t,

dass der vor- und rückbewegbare zweite Horizontalschlitten (16) auf dem hin- und herbewegbaren ersten Horizontalschlitten (9) und der Zangenschlitten (20) und der Blechstützenschlitten (21) am zweiten Horizontalschlitten (16) angeordnet ist bzw. sind.

7. Vorrichtung nach Anspruch 1,

d a d u r c h   g e k e n n z e i c h n e t,

dass der hin- und herbewegbare erste Horizontalschlitten (9) auf dem vor- und rückbewegbaren zweiten Horizontalschlitten (16) und der Zangenschlitten (20) und der Blechstützenschlitten (21) am ersten Horizontalschlitten (9) angeordnet ist bzw. sind.

8. Vorrichtung nach Anspruch 1,

d a d u r c h   g e k e n n z e i c h n e t,

dass die Zange (24, 46, 50) um eine parallel zur Bewegungsebene des Werkzeugstempels (3) verlaufende horizontale Achse (25) drehbar angeordnet ist.

9. Vorrichtung nach Anspruch 7,

d a d u r c h   g e k e n n z e i c h n e t,

dass die Zange (46) die Kante der Blechtafel (28) seitlich vor und/oder hinter dem Werkzeugstempel (3) umgreift.

0115602

10. Vorrichtung nach Anspruch 4,

d a d u r c h   g e k e n n z e i c h n e t,

dass am Gegenhalter (45) mindestens eine Haltevorrichtung angeordnet ist.

Fig.1

Fig.2

0 15602

# Fig.3

# Fig.5

# Fig.4

# Fig.6

Europäisches
Patentamt

EUROPÄISCHER RECHERCHENBERICHT

0115602

Nummer der Anmeldung

EP 83 11 2473

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | SU-A- 175 803 (BOTCHEROW et al.) <br> * Figur * | 1,6-9 | B 21 D 5/02 <br> B 21 D 43/10 <br> B 25 J 11/00 <br> B 25 J 15/02 |
| | --- | | |
| T | EP-A-0 100 420 (INVENTIO AG) <br><br> * Insgesamt * | 1,2,4, 8,9 | |
| | --- | | |
| A | GB-A-2 004 216 (SALVAGNINI TRANSFERICA) <br> * Insgesamt * | 1,4,5 | |
| | --- | | |
| A | FR-A-1 332 673 (ARNODIN REUNIS) <br> * Insgesamt * | 1,6-9 | |
| | --- | | |
| A | DE-A-2 554 277 (BANNING) <br> * Insgesamt * | 1,8,9 | RECHERCHIERTE SACHGEBIETE (Int. Cl. ³) |
| | --- | | |
| D,A | DE-B-2 806 987 (HASENCLEVER) <br> * Insgesamt * | 1,6,7 | B 21 D <br> B 21 J <br> B 23 Q <br> B 25 J |
| | --- | | |
| A | DE-A-3 120 352 (MENGELE & SÖHNE) | | |
| | --- | | |
| A | DE-A-2 034 518 (MENGELE & SÖHNE) | | |
| | --- | | |
| A | FR-A-1 529 962 (TOS KURIM NARODNI PODNIK) | | |
| | ----- | | |

Der vorliegende Recherchenbericht wurde für alle Patentansprüche erstellt.

| Recherchenort <br> DEN HAAG | Abschlußdatum der Recherche <br> 29-03-1984 | Prüfer <br> ROSENBAUM H.F.J. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82